# EUROPÄISCHE PATENTANMELDUNG

(11) **EP 1 154 558 A2**
(43) Veröffentlichungstag der Anmeldung: **14.11.2001**
(21) Anmeldenummer: 01111390.9
(22) Anmeldetag: 10.05.2001
(51) Int. Cl.: H02P 8/42

(54) **Vorrichtung zur Steuerung eines Synchronmotors**

(30) Priorität: 12.05.2000 DE 10023138
(71) Anmelder: Aradex AG, 73547 Lorch (DE)
(72) Erfinder: Vetter, Thomas, 73547 Lorch (DE)
(74) Vertreter: Ruckh, Rainer Gerhard, Dr.

(57) **Zusammenfassung**

Die Erfindung betrifft eine Vorrichtung (1) zur Steuerung eines Synchronmotors (2), welcher synchron zu einer anliegenden Netzspannung läuft. Die Vorrichtung weist eine Steuereinheit (3) auf, in welcher die Phasenlage der Netzspannung erfassbar ist, und in welcher Positionierbefehle generierbar sind. Über die Steuereinheit (3) sind erste Schaltmittel zur Vorgabe der dem Positionierbefehl entsprechenden Richtung des Synchronmotors (2) aktivierbar. Nach erfolgter Vorgabe der Richtung sind über die Steuereinheit (3) in Abhängigkeit der Phasenlage der Netzspannung zweite Schaltmittel aktivierbar, so dass der Synchronmotor (2) jeweils in einer konstanten Phasenlage der Netzspannung aktiviert wird und nach einer in der Steuereinheit (3) vorgegebenen, einer dem Positionierbefehl entsprechenden Zeit deaktiviert wird. Erfindungsgemäß wird die Vorrichtung zur Positionierung von Zustellachsen und Hilfsachsen von bahnverarbeitenden Maschinen eingesetzt.

## Beschreibung

Die Erfindung betrifft eine Vorrichtung zur Steuerung eines Synchronmotors sowie ein Verfahren zur schrittgenauen Positionierung mittels dieser Vorrichtung.

Aus der DE 693 17 156 T2 ist eine elektronische Startvorrichtung für einen Synchronmotor bekannt. Die Startvorrichtung umfasst eine von einer Netzspannung betriebene elektrische Schaltung. Diese umfasst einen Rotor-Positionssensor zur Erkennung der Position des Rotors des Synchronmotors. Das Positionssignal des Rotor-Positionssensors wird einem Phasenverschiebungskreis zugeführt, dessen Ausgang auf ein Ambivalenz-Gatter geführt ist. Dort wird das Positionssignal mit dem Netzspannungssignal verknüpft. Das Ambivalenz-Gatter schließlich steuert vorzugsweise einen von einem Triac gebildeten Leistungsschalter, über welchen der Motor eingeschaltet wird.

Mittels des Ambivalenz-Gatters kann erfasst werden, ob einerseits die Netzspannung positiv oder negativ ist und ob der über den Leistungsschalter und den Motor fließende Strom nahe null ist. Schließlich kann erfasst werden, ob der Drehwinkel des Rotors zwischen 0° und 180° oder zwischen 180° und 360° liegt.

Das Einschalten des Motors erfolgt derart, dass die Winkellage des Rotors in Phase mit dem Strom ist. Mit dieser Schaltungsanordnung wird erreicht, dass der Motor seine Synchrondrehzahl innerhalb einer halben Periode der Netzspannung erreicht.

Aus der DE 195 48 470 A1 ist eine Vorrichtung für die Vorschubsteuerung unkonfektionierter endloser Schrift-Bahnen zur Laserbeschriftung bekannt.

Die endlosen Schriftbahnen sind auf einem Auf- und Abwickeldorn bereitgestellt und werden in einer in Längsrichtung der Schriftbahnen verlaufenden Vorschubrichtung über mehrere Walzen gefördert. In einem vorgegebenen Beschriftungsfeld sollen die Schriftbahnen mittels eines Laserbeschriftungssystems beschriftet werden.

Das Beschriftungsfeld an der Schriftbahn ist mit einer Lasermarke markiert, die mit einem Sensor erfasst wird. Die Sensorsignale dienen als Steuergrößen für einen Synchronmotor, mittels dessen der Vorschub der Schriftbahn so gesteuert wird, dass das Beschriftungsfeld an seiner Sollposition liegt. Hierzu wird der Synchronmotor unmittelbar abgeschaltet, sobald die Lasermarke vom Sensor erkannt wird.

In diesem Fall wird der Synchronmotor bei Vorliegen eines vorgegebenen Sensorsignals lediglich abgeschaltet, so dass die Steuerungsfunktion allein vom Sensor übernommen wird.

Der Erfindung liegt die Aufgabe zugrunde, eine Vorrichtung und ein Verfahren bereitzustellen, so dass mit einem Synchronmotor eine schrittgenaue Positionierung durchführbar ist.

Zur Lösung dieser Aufgabe sind die Merkmale der Ansprüche 1 und 16 vorgesehen.

Die erfindungsgemäße Vorrichtung umfasst eine Vorrichtung zur Steuerung eines Synchronmotors, welcher synchron zu einer anliegenden Netzspannung läuft. Die Vorrichtung weist eine Steuereinheit auf, in welcher die Phasenlage der Netzspannung erfasst wird, und in welcher Positionierbefehle generiert werden. Über die Steuereinheit sind erste Schaltmittel zur Vorgabe der dem Positionierbefehl entsprechenden Richtung des Synchronmotors aktivierbar. Nach erfolgter Vorgabe der Richtung sind über die Steuereinheit in Abhängigkeit der Phasenlage der Netzspannung zweite Schaltmittel aktivierbar, so dass der Synchronmotor jeweils in einer konstanten Phasenlage vorzugsweise in einem Nulldurchgang der Netzspannung aktiviert wird. Nach einer in der Steuereinheit vorgegebenen, einer dem jeweiligen Positionierbefehl entsprechenden Zeit wird der Synchronmotor deaktiviert. Dabei entspricht diese Zeit vorzugsweise einer ganzen Anzahl von Netzvollwellen der Netzspannung.

Gemäß dem erfindungsgemäßen Verfahren werden mit dem von der Vorrichtung gesteuerten Synchronmotor Zustellachsen oder Hilfsachsen einer bahnverarbeitenden Maschine positioniert.

Mit der erfindungsgemäßen Vorrichtung können somit Schrittmotoren zu einer schrittgenauen Positionierung eingesetzt werden, wobei gemäß dem erfindungsgemäßen Verfahren eine schrittgenaue Positionierung von Zustellachsen oder Hilfsachsen in bahnverarbeitenden Maschinen, insbesondere Druckmaschinen, erfolgt.

Dadurch wird insbesondere bei derartigen bahnverarbeitenden Maschinen eine erhebliche Kosteneinsparung erzielt. Der Grund hierfür liegt zum einen darin, dass die Verwendung von Synchronmotoren erheblich preiswerter als die Verwendung von Schrittmotoren ist, die üblicherweise für Positionierungen verwendet werden. Weiterhin ist die Vorrichtung zur Steuerung des Synchronmotors äußerst kostengünstig herstellbar. Die Vorrichtung umfasst im wesentlichen nur die Steuereinheit sowie erste und zweite Schaltmittel, die als Relais oder Halbleiterrelais ausgebildet sind. Die so ausgebildete Vorrichtung weist eine geringe Anzahl von Bauteilen auf und damit auch ein geringes Bauvolumen. Weiterhin ist vorteilhaft, dass die Vorrichtung eine geringe Ausfallwahrscheinlichkeit aufweist.

Ein weiterer wesentlicher Vorteil besteht darin, dass mit der erfindungsgemäßen Vorrichtung während eines Produktionsprozesses beliebig oft mit großer Genauigkeit in verschiedenen Richtungen Positionierungen vorgenommen werden können. Insbesondere tritt auch bei einer großen Anzahl von Positionierungen keine Kumulation von Positionierungsfehlern auf.

Die Erfindung wird im nachstehenden anhand der Zeichnungen erläutert. Es zeigen:
- Figur 1:: Blockschaltbild der erfindungsgemäßen Vorrichtung zur Steuerung eines Synchronmotors.
- Figur 2:: Schematische Darstellung des zeitlichen Ablaufs der Steuerung mittels der Vorrichtung gemäß Figur 1.
- Figur 3:: Ausschnitt einer bahnverarbeitenden Maschine mit von der Vorrichtung gemäß Figur 1 gesteuerten Walzen.

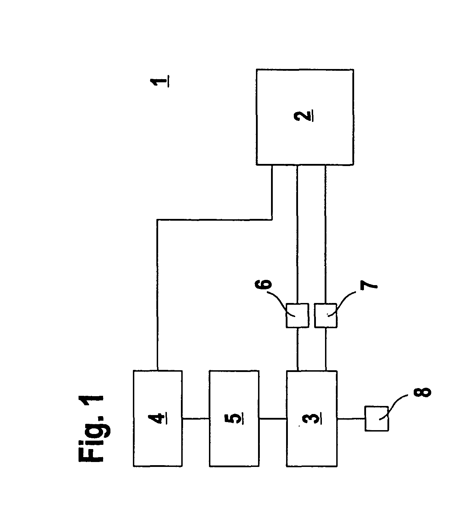

Figur 1 zeigt ein Blockschaltbild eines Ausführungsbeispiels der erfindungsgemäßen Vorrichtung 1 zur Steuerung eines Synchronmotors 2.

Die Steuerung erfolgt im wesentlichen über eine Steuereinheit 3, die von einem Mikroprozessor oder dergleichen gebildet ist.

Der Synchronmotor 2 wird von einer Netzspannung gespeist, die von einer Spannungsversorgung 4 bereitgestellt wird. Der Synchronmotor 2 läuft dabei synchron zur Netzspannung, deren Frequenz im vorliegenden Fall 50 Hz beträgt. Prinzipiell sind auch andere Frequenzen der Netzspannung, beispielsweise 60 Hz, möglich.

Der Synchronmotor 2 weist eine bekannte Startvorrichtung auf, mittels derer erreicht wird, dass der Synchronmotor 2 bereits innerhalb einer Netzhalbwelle seine Synchrondrehzahl erreicht und synchron zur anliegenden Netzspannung läuft.

Die von der Spannungsversorgung 4 bereitgestellte Netzspannung wird in einer Umsetzer-Schaltung 5 in ein Niedervolt-Rechteckspannungssignal gewandelt und in die Steuereinheit 3 eingelesen. Dabei ist der Pegel des Niedervolt-Rechteckspannungssignals an die in der Steuereinheit 3 verarbeitbaren Spannungspegel angepasst.

Zur Ansteuerung des Synchronmotors 2 sind an Ausgänge der Steuereinheit 3 erste und zweite Schaltmittel angeschlossen, die auf Anschlüsse des Synchronmotors 2 geführt sind.

Die ersten und zweiten Schaltmittel sind vorzugsweise von Relais, insbesondere Halbleiterrelais gebildet. Im vorliegenden Ausführungsbeispiel sind die ersten Schaltmittel als Richtungsrelais 6 ausgebildet. Die zweiten Schaltmittel bilden ein Startrelais 7, welches von einem Leistungsschalter, vorzugsweise einem Triac gebildet ist.

An die Steuereinheit 3 ist zudem ein Referenzschalter 8 angeschlossen. Mit diesem Referenzschalter 8 ist die Absolutposition einer von dem Synchronmotor 2 gesteuerten Einheit erfassbar.

Die Frequenz der in der Umsetzer-Schaltung 5 generierten Niedervolt-Rechteckspannungssignale entspricht der Frequenz der anliegenden Netzspannung. Im Idealfall wird in der Umsetzer-Schaltung 5 eine binäre Folge von rechteckförmigen High-Signal- und Low-Signal-Pulsen generiert, deren Pulsbreiten jeweils identisch sind. Für den vorliegenden Fall einer mit 50 Hz variierenden Netzspannung betragen die Pulsbreiten der High-Signal- und Low-Signal-Pulse im Idealfall jeweils 10 msec.

Eine derartig exakte Umsetzung der Netzspannung in Niedervolt-Rechteckspannungssignale erfordert jedoch einen hohen schaltungstechnischen Aufwand.

Für die erfindungsgemäße Vorrichtung 1 ist eine derartig exakte Umsetzung nicht erforderlich, so dass kostengünstige Umsetzer-Schaltungen 5, die im wesentlichen einen Vorwiderstand, eine Freilaufdiode und einen Optokoppler aufweisen, verwendet werden können. Bei derartigen Umsetzer-Schaltungen 5 werden Niedervolt-Rechteckspannungssignale generiert, bei welchen die Pulsbreiten der High-Signal- und Low-Signal-Pulse nicht völlig identisch sind.

Typischerweise variieren die Pulsbreiten der High-Signal-Pulse im Bereich zwischen 8 und 10 msec während die Pulsbreiten der Low-Signal-Pulse im Bereich zwischen 10 und 12 msec variieren.

Die so generierte Folge von Rechteck-Pulsen wird in der Steuereinheit 3 zur Erfassung der Phase der Netzspannung abgetastet. Die Abtastung der Folgen von Rechteck-Pulsen erfolgt dabei in einem der Zykluszeit der Steuereinheit 3 entsprechenden Zeittakt. Die Zykluszeit der Steuereinheit 3 beträgt typischerweise 0,5 msec. Damit kann die Phase der Netzspannung trotz einer leichten Asymmetrie der High-Signal- und Low-Signal-Pulse mit einer Genauigkeit von 1 msec bestimmt werden.

Erfindungsgemäß erfolgt über die Steuereinheit 3 die Steuerung des Synchronmotors 2 in Abhängigkeit der Phase der Netzspannung. Dabei werden in der Steuereinheit 3 in Abhängigkeit der erfassten Phase der Netzspannung Positionierbefehle generiert. Erfindungsgemäß ist der Synchronmotor 2 mittels dieser Positionierbefehle schrittgenau positionierbar.

Ein derartiger Positionierbefehl umfasst zum einen die Vorgabe der Richtung des Synchronmotors 2 und zum anderen die Vorgabe des Betrags einer Positionierstrecke, die mit dem Synchronmotor 2 einstellbar ist.

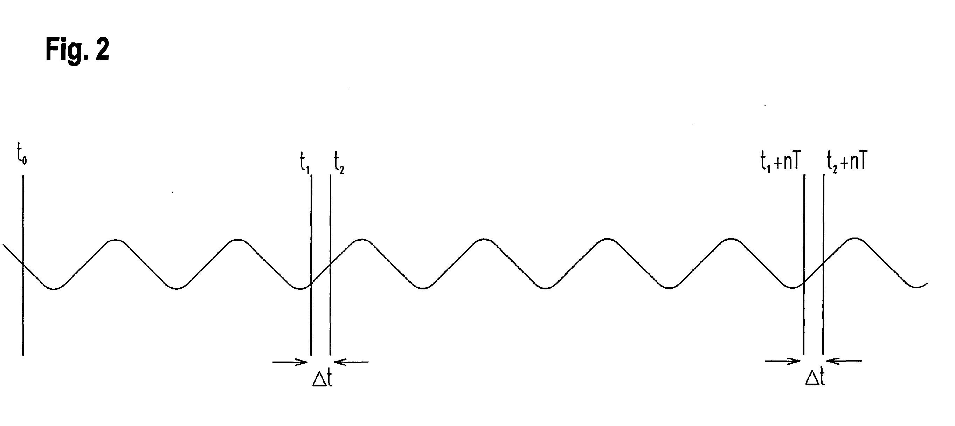

Die Funktionsweise der Ansteuerung des Synchronmotors 2 durch die Steuereinheit 3 ist insbesondere aus Figur 2 ersichtlich.

In Figur 2 ist der Verlauf der sinusförmigen Netzspannung ausschnittsweise dargestellt. Die Periodendauer der Netzspannung ist mit T bezeichnet.

In einem ersten Schritt wird in der Steuereinheit 3 ein Positionierbefehl rechnerisch ermittelt. Der Positionierbefehl umfasst eine Richtungsvorgabe für den Synchronmotor 2 sowie einen Betrag einer Positionierstrecke.

Der Betrag der Positionierstrecke wird dabei auf eine ganze Anzahl von Netzvollwellen umgerechnet. Der dabei auftretende Rundungsfehler wird in der Steuereinheit 3 abgespeichert und bei der Berechnung weiterer Positionierstrecken darauf folgender Positionierbefehle so verrechnet, dass sich die Rundungsfehler, die bei verschiedenen Positionierbefehlen auftreten, kompensieren.

In einem zweiten Schritt erfolgt die Vorgabe der Richtung des Synchronmotors 2 über die Steuereinheit 3. Hierzu wird zu einem Zeitpunkt t₀ das Richtungsrelais 6 über die Steuereinheit 3 aktiviert. Das Richtungsrelais 6 ist hierzu an die für die Richtungsvorgabe des Synchronmotors 2 vorgesehene Zuleitung angeschlossen.

Danach folgt eine Wartezeit, die bei dem Ausführungsbeispiel gemäß Figur 2 der Zeitdifferenz t₁ - t₀ entspricht. Diese Zeitdifferenz ist größer als die Reaktionszeit des Richtungsrelais 6. Nach Ablauf der Wartezeit ist somit sichergestellt, dass die Richtungsvorgabe über das Richtungsrelais 6 beendet ist.

Im Anschluss daran erfolgt die Aktivierung des Startrelais 7, wodurch der Synchronmotor 2 für die der in der Steuereinheit 3 berechneten Positionierstrecke entsprechende Anzahl von Netzvollwellen aktiviert wird.

Die Aktivierung des Synchronmotors erfolgt in Abhängigkeit der in der Steuereinheit ermittelten Phasenlage der Netzspannung. Dabei wird der Synchronmotor 2 bei jedem Positionierbefehl in einem Nulldurchgang der Netzspannung aktiviert, wobei sich dabei die Netzspannung jeweils in derselben Phasenlage befindet.

Wie in Figur 2 beispielhaft dargestellt, wird der Synchronmotor 2 zu einem Zeitpunkt t₂ aktiviert und bleibt für eine Anzahl n Netzvollwellen aktiviert, wobei im vorliegenden Fall n = 4 ist. Die Deaktivierung des Synchronmotors 2 erfolgt ebenfalls über das Startrelais 7. Bei dem in Figur 2 dargestellten Fall erfolgt die Aktivierung des Synchronmotors 2 zum Zeitpunkt t₂ in einer bestimmten Phasenlage der Netzspannung, nämlich in einem Nulldurchgang der Netzspannung, auf welche eine positive Halbwelle der Netzspannung erfolgt. Jeder andere Positionierbefehl erfolgt in exakt derselben Phasenlage der Netzspannung.

Da der Synchronmotor für jeden Positionierbefehl in derselben Phasenlage aktiviert wird und jeweils für eine ganze Anzahl von Netzvollwellen aktiviert bleibt, ist mit den so generierten Positionierbefehlen eine exakte und reproduzierbare Positionierung gewährleistet.

Da die Ansteuerung des Startrelais 7 nicht unendlich schnell über die Steuereinheit 3 erfolgt und da das Startrelais 7 eine endliche Reaktionszeit aufweist, erfolgt die Aktivierung des Synchronmotors 2 nicht unmittelbar mit der Aktivierung des Startrelais 7 sondern etwas verzögert.

Dieser Effekt wird in der Steuereinheit 3 kompensiert. Hierzu wird die Verzögerungszeit vorzugsweise experimentell bestimmt und als Zeitintervall Δt in der Steuereinheit 3 als Parameterwert abgespeichert. Typischerweise liegt das Zeitintervall Δt in der Größenordnung von 1 msec.

Die Aktivierung des Startrelais 7 erfolgt dann, wie aus Figur 2 ersichtlich, nicht exakt während des Nulldurchgangs der Netzspannung zum Zeitpunkt t₂ sondern zum Zeitpunkt t₁, der um die Zeit Δt vor dem Zeitpunkt t₂ liegt. Somit wird erreicht, dass der Synchronmotor 2 exakt zum Zeitpunkt t₂ aktiviert wird.

Dasselbe gilt für das Deaktivieren des Synchronmotors 2. Damit der Synchronmotor 2 exakt zum Zeitpunkt t₂ + nT deaktiviert wird, wird das Startrelais 7 zur Abschaltung des Synchronmotors 2 zu einer Zeit t₁ + nT durch die Steuereinheit 3 betätigt.

Mit der erfindungsgemäßen Vorrichtung 1 kann durch die Generierung von Positionierbefehlen in der Steuereinheit 3 der Synchronmotor 2 exakt und reproduzierbar schrittgenau positioniert werden.

Mittels des Referenzschalters 8 kann zudem die Absolutposition einer mittels des Synchronmotors 2 angetriebenen Einheit, wie zum Beispiel die Zustellachse einer bahnverarbeitenden Maschine, erfasst werden. Hierzu wird jeweils vor dem Start des Synchronmotors 2 der Referenzschalter 8 einmal angefahren und die dabei ermittelte Absolutposition in der Steuereinheit 3 als Parameterwert abgespeichert.

Ausgehend von diesem Parameterwert ist dann der Synchronmotor 2 über die Positionierbefehle in Absolutortsgrößen exakt positionierbar.
Erfindungsgemäß wird die Vorrichtung 1 gemäß Figur 1 zur schrittgenauen Positionierung von Zustellachsen oder Hilfsachsen einer bahnverarbeitenden Maschine eingesetzt.

Bei derartigen Zustellachsen oder Hilfsachsen handelt es sich insbesondere um mit einem Synchronmotor 2 angetriebene Walzen, welche zur Führung einer Bahn in der bahnverarbeitenden Maschine dienen. Demgegenüber sind die Hauptantriebe derartiger Maschinen als erheblich stärkere Motoren ausgebildet, so dass hier der Einsatz von Synchronmotoren 2 nicht in Frage kommt. Die bahnverarbeitende Maschine kann dabei insbesondere von einer Druckmaschine gebildet sein, in welcher Bahnen vorzugsweise im Mehrfarbendruck bedruckt werden. Die Bahnen können aus Folien, Papier, Pappe, Karton oder dergleichen bestehen.

Mittels der erfindungsgemäßen Vorrichtung 1 zur Steuerung eines Synchronmotors 2 ist durch die Vorgabe geeigneter Positionierbefehle der Anpressdruck zwischen zwei Walzen einstellbar. Eine derartige Einstellung des Anpressdrucks erfolgt insbesondere bei einem Farbwerk einer Druckmaschine.

Alternativ kann die Vorrichtung 1 zur Steuerung eines Synchronmotors 2 zur Quer- oder Längs-Registerung einer Bahn einer bahnverarbeitenden Maschine verwendet werden.

Bei einer Quer-Registerung wird mittels der in der Steuereinheit 3 generierten Positionierbefehle die Bahn quer zu deren Förderrichtung ausgerichtet, wobei die Bahn vorzugsweise in Längsrichtung einer die Bahn führenden Walze verschoben wird.

Bei einer Längs-Registerung erfolgt die Positionierung der Bahn in deren Förderrichtung.

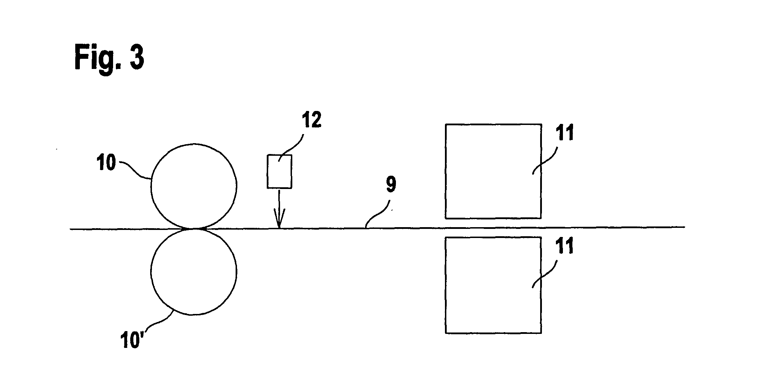

Ein Beispiel für eine derartige Längs-Registerung ist in Figur 3 dargestellt. Die Bahn besteht im vorliegenden Fall aus einer Papierbahn 9, die in einer Druckmaschine bedruckt wird. Figur 3 zeigt schematisch einen Ausschnitt dieser Druckmaschine, mit zwei als Transportwalzen 10, 10' ausgebildeten Walzen. Die Papierbahn 9 wird über die zwei gegenläufig rotierenden Transportwalzen 10, 10' einem Stanzwerk 11 am Auslauf der Druckmaschine zugeführt. Wenigstens eine der Transportwalzen 10, 10' ist von einem nicht dargestellten Synchronmotor 2 angetrieben, der von der erfindungsgemäßen Vorrichtung 1 gesteuert ist.

Für eine fehlerfreie Durchführung der Stanzvorgänge muss die Papierbahn 9 in fest vorgegebenen Positionen dem Stanzwerk 11 zugeführt werden. Zur Vorgabe der Positionen werden mittels eines Sensors 12 nicht dargestellte Passermarken auf der Papierbahn 9 abgetastet. Die Signale des Sensors 12 werden in die Steuereinheit 3 der erfindungsgemäßen Vorrichtung 1 eingelesen. In Abhängigkeit dieser Signale werden in der Steuereinheit 3 Positionierbefehle generiert, mittels derer die Papierbahn 9 positionsgenau dem Stanzwerk 11 zugeführt wird.

### Bezugszeichenliste

- (1): Vorrichtung
- (2): Synchronmotor
- (3): Steuereinheit
- (4): Spannungsversorgung
- (5): Umsetzer-Schaltung
- (6): Richtungsrelais
- (7): Startrelais
- (8): Referenzschalter
- (9): Papierbahn
- (10): Transportwalze
- (10'): Transportwalze
- (11): Stanzwerk
- (12): Sensor

## Patentansprüche

1. Vorrichtung zur Steuerung eines Synchronmotors, welcher synchron zu einer anliegenden Netzspannung läuft, **gekennzeichnet durch** eine Steuereinheit (3), in welcher die Phasenlage der Netzspannung erfassbar ist, und in welcher Positionierbefehle generierbar sind, wobei über die Steuereinheit (3) erste Schaltmittel zur Vorgabe der jeweils einem Positionierbefehl entsprechenden Richtung des Synchronmotors (2) aktivierbar sind und wobei nach erfolgter Vorgabe der Richtung über die Steuereinheit (3) in Abhängigkeit der Phasenlage der Netzspannung zweite Schaltmittel aktivierbar sind, so dass der Synchronmotor (2) jeweils in einer konstanten Phasenlage der Netzspannung aktiviert wird und nach einer in der Steuereinheit (3) vorgegebenen, einer dem jeweiligen Positionierbefehl entsprechenden Zeit deaktiviert wird.

2. Vorrichtung nach Anspruch 1, **dadurch gekennzeichnet, dass** die einem Positionierbefehl entsprechende Zeit der Aktivierung des Synchronmotors (2) jeweils einer Anzahl von Netzvollwellen der Netzspannung entspricht.

3. Vorrichtung nach einem der Ansprüche 1 oder 2, **dadurch gekennzeichnet, dass** der Synchronmotor (2) über das zweite Schaltmittel in einem Nulldurchgang der Netzspannung aktiviert wird.

4. Vorrichtung nach einem der Ansprüche 1 - 3, **dadurch gekennzeichnet, dass** die Netzspannung in einer Umsetzer-Schaltung (5) in ein Niedervolt-Rechteckspannungssignal gewandelt wird, welches in die Steuereinheit (3) eingelesen wird.

5. Vorrichtung nach Anspruch 4, **dadurch gekennzeichnet, dass** die Pulse des Niedervolt-Rechteckspannungssignals mit einem durch die Zykluszeit der Steuereinheit (3) vorgegebenen Zeittakt abgetastet werden, wobei die Zykluszeit erheblich kleiner als die Pulsbreiten der Pulse ist.

6. Vorrichtung nach einem der Ansprüche 1 - 5, **dadurch gekennzeichnet, dass** die ersten und zweiten Schaltmittel jeweils von einem Relais gebildet sind.

7. Vorrichtung nach Anspruch 6, **dadurch gekennzeichnet, dass** die Relais als Halbleiterrelais ausgebildet sind.

8. Vorrichtung nach einem der Ansprüche 1 - 7, **dadurch gekennzeichnet, dass** der Steuereinheit (3) ein Referenzschalter (8) zur Absolutortsbestimmung zugeordnet ist.

9. Vorrichtung nach Anspruch 8, **dadurch gekennzeichnet, dass** der mit dem Referenzschalter (8) bestimmte Absolutort in der Steuereinheit (3) als Parameterwert abgespeichert ist.

10. Vorrichtung nach einem der Ansprüche 1 - 9, **dadurch gekennzeichnet, dass** die Zeitdifferenz zwischen der Aktivierung des ersten und zweiten Schaltmittels an die Reaktionszeit der ersten Schaltmittel angepasst ist.

11. Vorrichtung nach einem der Ansprüche 3 - 10, **dadurch gekennzeichnet, dass** die Aktivierung der zweiten Schaltmittel um eine Zeit Δt vor einem Nulldurchgang der Netzspannung erfolgt, wobei Δt durch die Reaktionszeit der zweiten Schaltmittel vorgegeben ist.

12. Vorrichtung nach Anspruch 11, **dadurch gekennzeichnet, dass** die Zeit Δt etwa 1 ms beträgt.

13. Vorrichtung nach einem der Ansprüche 11 oder 12, **dadurch gekennzeichnet, dass** der Wert von Δt als Parameterwert in der Steuereinheit (3) abgespeichert ist.

14. Vorrichtung nach einem der Ansprüche 1 - 13, **dadurch gekennzeichnet, dass** in der Steuereinheit (3) eine dem Positionierbefehl entsprechende Positionierstrecke in eine ganze Anzahl von Netzvollwellen umgerechnet wird.

15. Vorrichtung nach Anspruch 14, **dadurch gekennzeichnet, dass** der bei der Umrechnung der Positionierstrecke in eine Anzahl von Netzvollwellen auftretende Rundungsfehler in der Steuereinheit (3) abgespeichert wird, und dass zur Kompensation des Rundungsfehlers dieser bei nachfolgenden Positionierbefehlen durchgeführten Umrechnungen verrechnet wird.

16. Verfahren zur schrittgenauen Positionierung mittels eines von der Vorrichtung gemäß einer der Ansprüche 1 - 15 gesteuerten Synchronmotors, **dadurch gekennzeichnet, dass** mit dem Synchronmotor (2) Zustellachsen oder Hilfsachsen einer bahnverarbeitenden Maschine positioniert werden.

17. Verfahren nach Anspruch 16, **dadurch gekennzeichnet, dass** die Zustellachsen oder Hilfsachsen angetriebene Walzen (10, 10') umfassen, über welche eine Bahn in der bahnverarbeitenden Maschine geführt wird.

18. Verfahren nach Anspruch 17, **dadurch gekennzeichnet, dass** mittels der Positionierung wenigstens einer Zustellachse oder Hilfsachse eine Quer-Registerung einer Bahn erfolgt.

19. Verfahren nach Anspruch 17, **dadurch gekennzeichnet, dass** mittels der Positionierung wenigstens einer Zustellachse oder Hilfsachse eine Längs-Registerung einer Bahn erfolgt.

20. Verfahren nach Anspruch 17, **dadurch gekennzeichnet, dass** mittels der Positionierung wenigstens einer Zustellachse oder Hilfsachse der Anpressdruck zwischen zwei Walzen (10, 10') eingestellt wird.

21. Verfahren nach einem der Ansprüche 16 - 19, **dadurch gekennzeichnet, dass** die bahnverarbeitende Maschine von einer Druckmaschine gebildet ist.
